# EUROPÄISCHE PATENTANMELDUNG

(11) **EP 0 567 713 A1**
(43) Veröffentlichungstag der Anmeldung: **03.11.1993**
(21) Anmeldenummer: 92810314.2
(22) Anmeldetag: 29.04.1992
(51) Int. Cl.: C02F 1/72, C01B 17/16, C01B 17/96

(54) **Verfahren und Vorrichtung zur Behandlung von Abwasser mit Hydrogensulfiden und Hydrogensulfiten**

(71) Anmelder: Sulzer Chemtech AG, CH-8404 Winterthur (CH)
(72) Erfinder: Schaub, Martin, CH-8483 Kollbrunn (CH)
(74) Vertreter: Heubeck, Bernhard

(57) **Zusammenfassung**

Abwasser (2) welches Hydrogensulfid und Hydrogensulfit enthält, wird in einer Kontakt- und Reaktionskolonne (1) mit zugeführter Luft (3) in Kontakt gebracht. Dabei wird einerseits das Hydrogensulfit durch Oxidation in Sulfat und Schwefelsäure umgewandelt und andererseits das Hydrogensulfid mit Schwefelsäure in Sulfat und Schwefelwasserstoff umgewandelt. Das Schwefelwasserstoffgas wird mit der Luft als Stripmittel ausgetragen, während das Sulfat in Lösung verbleibt. Eine pH-Regelung (6) kompensiert nicht stöchiometrische Verhältnisse von Sulfiden und Sulfiten im zugeführten Abwasser.

## Beschreibung

Die Erfindung betrifft ein Verfahren und eine Vorrichtung zur Behandlung von Abwasser einer Gaswäsche, welches Hydrogensulfidionen und Hydrogensulfitionen enthält.

Solche Abwässer mit einem Gemisch von Hydrogensulfiden, Sulfiten und Hydrogensulfiten fallen z.B. aus einer Gaswäsche einer Müllvergasung an. Diese Schwefelverbindungen sind mindestens teilweise nicht deponiefähig. Sie müssen daher aufbereitet oder inertisiert werden. Bisher wurden Sulfide und Sulfite in Abwässern einzeln behandelt. Sulfite wurden z.B. mit Peroxid in Schwefelsäure übergeführt, was aber relativ teuer ist. Insgesamt ist die bisherige Einzelbehandlung aufwendig und entsprechend teuer.

Es ist daher Aufgabe der vorliegenden Erfindung, ein Verfahren und eine Vorrichtung zu schaffen, mit denen solche Sulfide und Sulfite in Abwässern beide auf einfache Art und kostengünstiger als bisher inertisiert bzw. entsorgt werden können. Diese Aufgabe wird gelöst durch ein Verfahren gemäss Anspruch 1 und eine Vorrichtung nach Anspruch 6. Dabei werden Hydrogensulfide und Hydrogensulfite miteinander in einer Kontakt- und Reaktionskolonne mit einer pH-Regelung in einer zweistufigen Reaktion umgewandelt, wobei
a) das Hydrogensulfit mit dem Luftsauerstoff in Sulfat und Schwefelsäure und
b) die Schwefelsäure mit Hydrogensulfid zu Sulfat und Schwefelwasserstoff reagiert.

Das Schwefelwasserstoffgas wird mit der Luft abgeführt. Es kann anschliessend zu Schwefeldioxyd verbrannt und durch konventionelle Rauchgaswäsche in Sulfat umgewandelt werden. Das Sulfat kann z.B. als Gips ausgefällt werden.

Damit können die heiklen Hydrogensulfide und Hydrogensulfite miteinander entsorgt bzw. in unschädliche Sulfate umgewandelt werden.

Die abhängigen Ansprüche betreffen vorteilhafte Weiterbildungen der Erfindung. Mit besonderem Vorteil können als Kationen Natrium-, Kalium- oder Ammoniumionen eingesetzt und es kann der pH-Wert im Bereich zwischen 5 und 7 eingehalten sein. Besonders gute Reaktionsbedingungen können mit strukturierten Packungen in der Kolonne sowie mit einer Kreislaufrückführung zur Zirkulation des Abwassers in der Kolonne und mit einer pH-Regelung in der Kreislaufrückführung erreicht werden. Mit einer Serieschaltung von zwei Behandlungsstufen können besonders tiefe Restgehalte von Sulfiden und Sulfiten erreicht werden.

Im Folgenden wird die Erfindung anhand von Beispielen und Figuren weiter erläutert. Es zeigt:

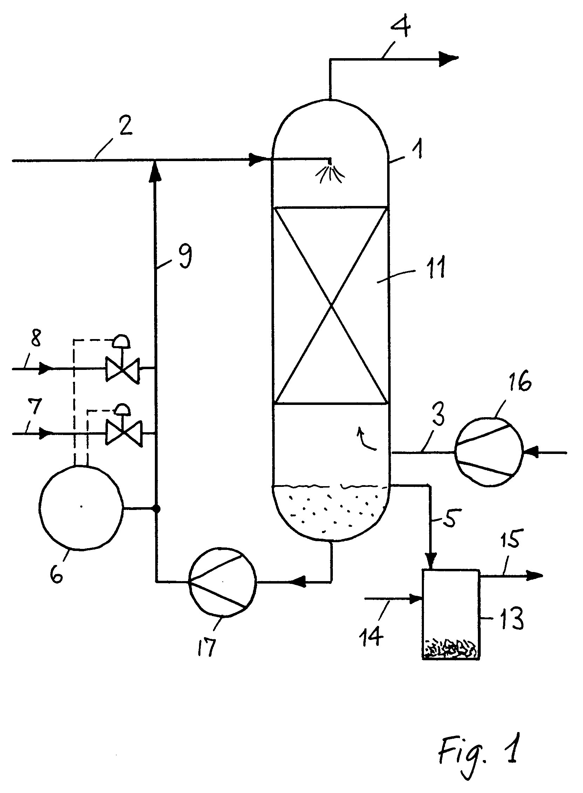

- Fig.1: schematisch eine erfindungsgemässe Vorrichtung,
- Fig.2: ein weiteres Beispiel mit zwei Behandlungsstufen in Serie.

Eine Kontakt- und Reaktionskolonne 1 weist einen Abwasserzulauf 2, eine Luftzuführung 3 mit einem Ventilator 16, eine Abluftableitung 4 und einen Ueberlauf 5 für das behandelte Abwasser auf. Das zu behandelnde Abwasser 2 einer Gaswäsche, welches Hydrogensulfid und Hydrogensulfit, bzw. ein Gemisch von Sulfiten und Hydrogensulfiten enthält, wird in den Kopf der Kolonne 1 zugeleitet und dort über einen Flüssigkeitsverteiler auf eine darunter liegende Kontaktzone mit Füllkörpern oder besser noch mit einer strukturierten Packung 11 aufgegeben. Der Kolonne von unten zugeführte Luft 3 wird im Gegenstrom zum Abwasser 2 durch die Packung 11 nach oben bewegt, wobei die Luft auch als Stripmittel für entstehendes Schwefelwasserstoffgas wirkt. Gleichzeitig werden aber auch die folgenden Reaktionen mit dem Sulfit und dem Sulfid des Abwassers in der Kolonne durchgeführt:
a) einerseits reagiert das Hydrogensulfit mit dem Luftsauerstoff zu Sulfat und Schwefelsäure,
b) wobei dann die Schwefelsäure das vorhandene Hydrogensulfid zu Sulfat und Schwefelwasserstoff umwandelt.

Der gasförmige Schwefelwasserstoff wird mit der Luft über dem Kopf der Kolonne abgeführt und anschliessend z.B. verbrannt, d.h. in Schwefeldioxyd umgewandelt.

Das entstandene gelöste Sulfat wird mit dem behandelten Abwasser 5 einer weiteren Verwendung oder Behandlung zugeführt. Hier wird das Sulfat in einer Behandlungsstufe 13 z.B. durch Zugabe 14 einer Kalziumverbindung als Gips gefällt (CaSO4). Das entschwefelte Abwasser wird über den Abfluss 15 abgeleitet. Im allgemeinen enthält das Abwasser 2 nicht Sulfit und Sulfid in stöchiometrischem Verhältnis. Eine pH-Regelung 6 mit Zudosierung von Säure 7 bzw. Lauge 8 ermöglicht die Kompensation von nichtstöchiometrischen Verhältnissen. Bei Ueberschuss von Hydrogensulfid muss noch entsprechend Schwefelsäure zudosiert werden, damit das Hydrogensulfid gemäss Reaktion b) vollständig in Schwefelwasserstoff umgewandelt wird. Umgekehrt verbleibt bei einem Ueberschuss von Sulfiten gemäss Reaktion a) noch überschüssige Schwefelsäure, welche durch Zudosierung z.B. von Natronlauge neutralisiert wird. Dies wird erreicht durch eine Regelung des pH-Werts vorzugsweise um pH = 6 z.B. in einem Bereich pH = 5 bis 7.

Besonders effizient ist es, das Abwasser über eine Kreislaufrückführung 9 mittels einer Pumpe 17 in die Kolonne zu rezirkulieren und dabei die pH-Regelung 6 in der Kreislaufrückführung anzuordnen.

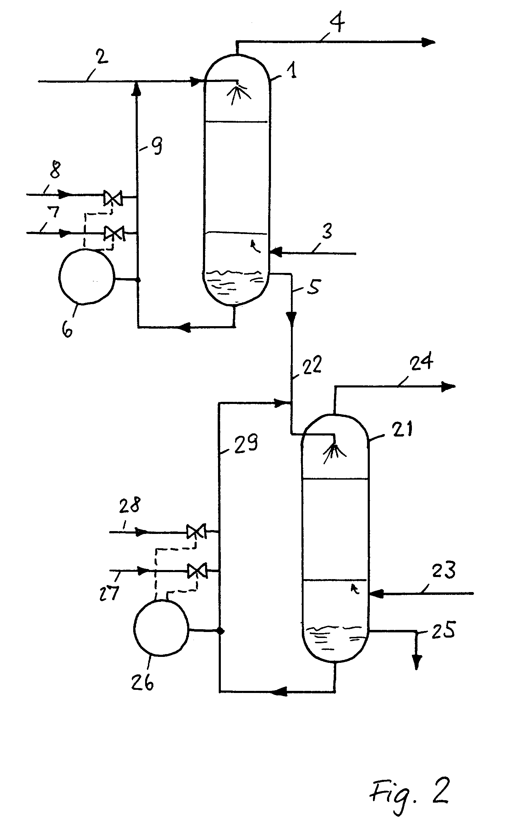

In Fig.2 sind zwei Vorrichtungen in Serie geschaltet, wobei der ersten Kontakt- und Reaktionskolonne 1 eine zweite Kolonne 21 nachgeschaltet ist, mit einem Abwasserzulauf 22, welcher aus dem Ablauf 5 der ersten Stufe gespiesen ist. Die zweite Stufe weist eine Frischluftzuführung 23, eine Abluftableitung 24, einen Abwasserablauf 25, eine Kreislaufrückführung 29 mit einer pH-Regelung 26 sowie mit Säuren- und Laugenzudosierungen 27, 28 auf. Damit können besonders tiefe Restgehalte von Sulfiden und Sulfiten im Abwasser erreicht werden, oder es kann höher aufkonzentriert werden.

## Patentansprüche

1. Verfahren zur Behandlung von Abwasser einer Gaswäsche, welches Hydrogensulfidionen und Hydrogensulfitionen enthält, dadurch gekennzeichnet, dass das Abwasser (2) mit zugeführter Luft (3) in Kontakt gebracht wird, wobei einerseits das Hydrogensulfit durch Oxidation mit dem Luftsauerstoff in Sulfat und Schwefelsäure umgewandelt wird und andererseits das Hydrogensulfid mit Schwefelsäure in Sulfat und H₂S umgewandelt wird, wobei das H₂S-Gas mit der Luft als Stripmittel aus dem Abwasser ausgetragen wird, während das Sulfat in Lösung verbleibt und wobei weiter durch Zugabe von Säure bzw. Lauge eine pH-Regelung (6) entsprechend den Anteilen von Hydrogensulfid und Hydrogensulfit im zugeführten Abwasser erfolgt.

2. Verfahren nach Anspruch 1, dadurch gekennzeichnet, dass als Kationen Natrium-, Kalium- oder Ammoniumionen eingesetzt sind.

3. Verfahren nach Anspruch 1, dadurch gekennzeichnet, dass ein pH-Wert im Bereich zwischen 5 und 7 eingehalten wird.

4. Verfahren nach einem der vorangehenden Ansprüche, dadurch gekennzeichnet, dass das H₂S-Gas in der Abluft (4) anschliessend verbrannt wird.

5. Verfahren nach einem der vorangehenden Ansprüche, dadurch gekennzeichnet, dass das Sulfat des Abwassers anschliessend durch Zugabe von Kalk oder einer anderen Kalziumverbindung als Gips aus gefällt wird.

6. Vorrichtung zur Ausführung des Verfahrens nach einem der vorangehenden Ansprüche mit einer Kontakt- und Reaktionskolonne (1), welche einen Abwasserzulauf (2), eine Zuführung für Frischluft (3), eine Ableitung der H₂S-Gas enthaltenden Abluft (4) und einen Ueberlauf für Sulfat enthaltendes behandeltes Abwasser (5) aufweist, sowie mit einer pH-Regeleinrichtung (6), welche je eine Zuführung für Säure (7) und Lauge (8) aufweist.

7. Vorrichtung nach Anspruch 6, dadurch gekennzeichnet, dass die Kontakt- und Reaktionskolonne mit Füllkörpern oder strukturierten Packungen (11) ausgerüstet ist.

8. Vorrichtung nach Anspruch 6 oder 7, dadurch gekennzeichnet, dass zur Zirkulation des Abwassers in der Kolonne eine Kreislaufrückführung (9) vorgesehen ist.

9. Vorrichtung nach Anspruch 8, dadurch gekennzeichnet, dass die pH-Regelung (6) in der Kreislaufrückführung (9) angeordnet ist.

10. Vorrichtung nach einem der Ansprüche 6 bis 9, dadurch gekennzeichnet, dass mindestens zwei Behandlungsstufen in Serie mit je einer Kontakt- und Reaktionskolonne (1,21) und je einer zugeordneten, separat einstellbaren pH-Regelung (6,26) vorgesehen sind.
